# FASCICULE DE BREVET EUROPEEN

(11) **EP 1 079 325 B1**
(45) Date de publication et mention de la délivrance du brevet: **05.04.2006**
(21) Numéro de dépôt: 99116617.4
(22) Date de dépôt: 25.08.1999
(51) Int. Cl.: G06F 3/033

(54) **Montre comprenant un dispositif de commande sans contact d'un curseur d'ordinateur**
Uhr mit berührungsloser Steuervorrichtung für eine Computer-Maus
Watch having a non-contact computer cursor controller

(43) Date de publication de la demande: 28.02.2001
(73) Titulaire: SWATCH AG, CH-2500 Biel (CH)
(72) Inventeur: Berthaud, Christophe, 2533 Evilard (CH)
(74) Mandataire: Ravenel, Thierry Gérard Louis

(56) Documents cités:
- EP-A- 0 782 336
- EP-A- 0 789 320
- US-A- 5 638 092
- US-A- 5 729 220
- PATENT ABSTRACTS OF JAPAN vol. 1999, no. 4, 30 avril 1999 (1999-04-30) & JP 11 015401 A (CASIO COMPUT CO LTD.), 22 janvier 1999 (1999-01-22)

## Description

La présente invention se réfère à une montre associée à un dispositif de commande d'un curseur d'ordinateur. En d'autres termes, la présente invention se propose d'intégrer dans une montre un dispositif équivalent à une souris d'ordinateur sans contact, c'est à dire avec une communication non câblée entre la montre et l'ordinateur. Une telle communication est connue de l'homme du métier qui peut utiliser notamment une communication à l'aide d'ondes électromagnétiques, d'ondes ultrasonores ou infrarouges.

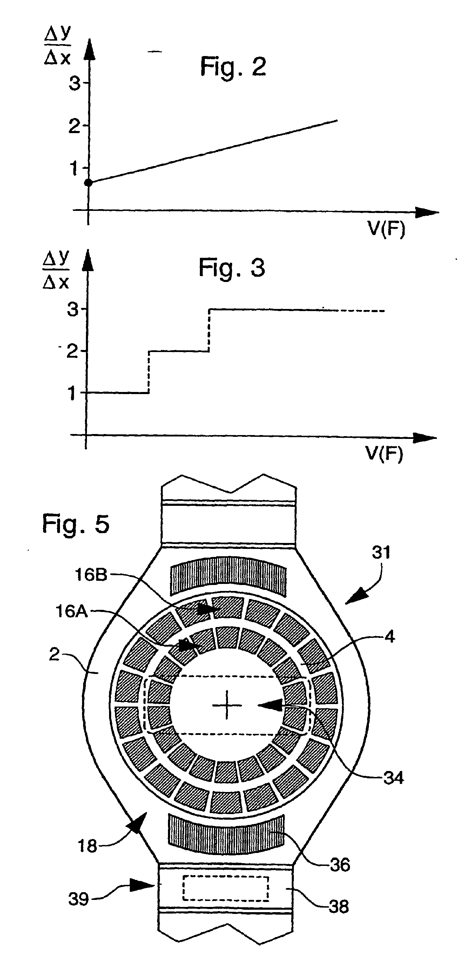

Il est connu WO 96/34333 un dispositif d'interface sans contact et portable servant de souris d'ordinateur. Dans son mode de réalisation préféré et décrit, ce document propose d'intégrer un tel dispositif d'interface entre un utilisateur et l'ordinateur dans une bague. Dans sa partie supérieure la bague comprend une première protubérance formant logement pour un circuit électronique et comprenant à sa surface une antenne directionnelle. Dans la partie latérale avant est prévue une deuxième protubérance dans laquelle est agencée un capteur de force à deux dimensions servant à l'actionnement d'un curseur d'ordinateur. De plus, un autre capteur de force est prévu dans la partie inférieure pour effectuer des sélections d'objets sur l'écran ou des commandes en relation avec ces objets. Une telle action est mentionnée par la suite comme un "clic". En se référant aux figures 2 et 3 et à la description correspondante de ce document, il ressort que le capteur prévu pour déplacer le curseur d'ordinateur est formé par un capteur de force bidimensionnel actionné par le pouce de l'utilisateur. Ce capteur de force permet de déplacer le curseur selon deux directions perpendiculaires représentées à la figure 2. Le capteur de force permet donc de déterminer dans laquelle des quatre directions données à la figure 2 est exercée la force du pouce dans le plan du capteur. On notera qu'un tel capteur de force pour actionner un curseur limite premièrement la précision de déplacement du curseur et n'est pas d'utilisation aisée étant donné que la bague subit un mouvement sur le doigt, la peau du doigt subissant des déplacements relativement importants. Ainsi il s'exerce une contrainte mécanique sur le doigt et un déplacement de la bague lorsqu'une force est appliquée par le pouce dans une des directions du plan du capteur. On comprend donc que la commande du curseur est entravée par ces mouvements de la bague et qu'en plus cela produit un désagrément pour l'utilisateur.

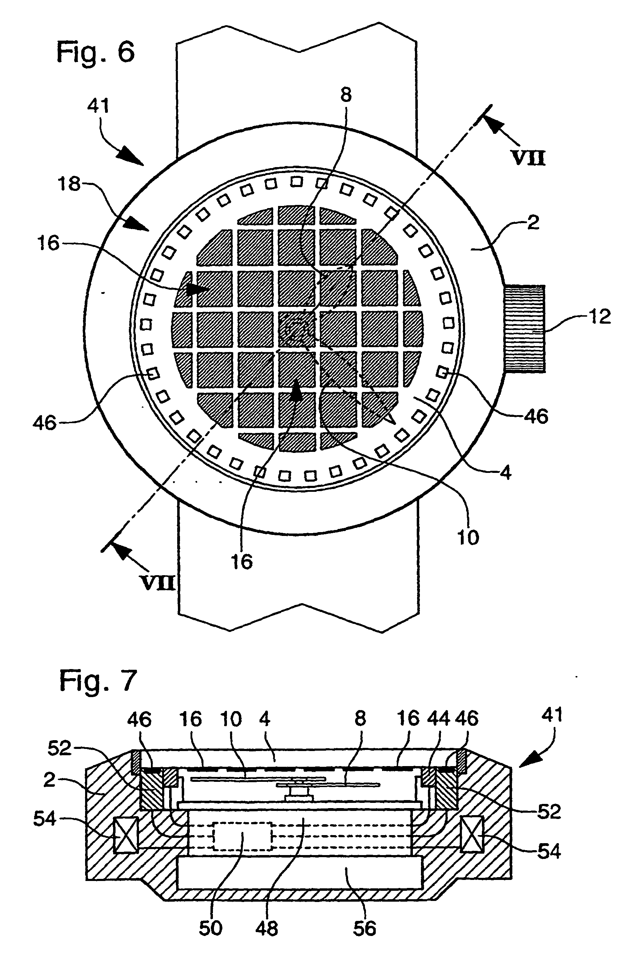

Comme alternative envisageable, le document WO 96/34333 mentionne qu'il est possible d'agencer des capteurs adjacents sur la bague en lieu et place du capteur de force bidimensionnel de manière que la direction de mouvement de curseur est déterminé par l'activation séquentielle des capteurs adjacents. Cet enseignement peu clair et largement insuffisant ne permet pas à l'homme du métier de comprendre comment réaliser ces capteurs adjacents et comment les utiliser pour commander correctement un curseur d'ordinateur. De plus, les petites dimensions de la bague représentée dans ce document semblent fortement compromettre une telle réalisation. L'homme du métier peut trouver dans le document US 5,481,265 un dispositif similaire où il est prévu un organe actionnable par le pouce pour commander un curseur d'ordinateur selon deux directions orthogonales. Cet organe comprend quatre régions indépendantes formant quatre capteurs de force adjacents qui peuvent être actionnés successivement par le pouce pour diriger le curseur en haut, à droite, en bas ou à gauche. Selon une variante, ces quatre capteurs de pression permettent de déplacer le curseur à l'un des quatre coins de l'écran d'ordinateur (voir figures 7a et 12). L'utilisation de ce dispositif n'est pas du tout aisée étant donné la position requise pour le pouce. De plus, l'application sélective d'une force sur les quatre capteurs de pression susmentionnés n'est pas facile, voire compromise. Ainsi, la commande de déplacement du curseur est approximative et de toute façon limitée comme cela ressort de la description du document US 5,481,265.

La présente invention se propose de pallier les inconvénients mentionnés relatifs aux deux documents cités en proposant une montre-souris telle que définie à la revendication 1. Le document PATENT ABSTRACTS OF JAPAN, vol. 1999, no. 4, JP 11 015401 A divulge une montre selon le préambule de la revendication 1. Une montre est un objet portable au poignet qui peut présenter une surface relativement grande dans une réalisation conventionnelle. En général, la majeure partie de la surface supérieure d'une montre est occupée par les moyens d'affichage. La présente invention est remarquable en ce que l'élément externe formant la glace protégeant les moyens d'affichage ou une partie externe d'une cellule d'affichage, notamment d'une cellule LCD, est utilisé comme support pour des plages sensibles au toucher permettant de commander aisément et précisément un curseur d'ordinateur.

De plus, il est prévu divers moyens permettant d'effectuer un "clic" ou plusieurs "clics" pour sélectionner un objet représenté à l'écran d'ordinateur ou pour effectuer une commande en relation avec cet objet. Pour ce faire, il est notamment prévu d'utiliser un bouton-poussoir conventionnel agencé soit dans une partie latérale du boîtier, soit dans la partie supérieure entourant la glace de montre.

Ainsi, la montre dont l'invention sert d'interface pour déplacer un curseur d'ordinateur et effectuer diverses commandes tout en conservant une forme conventionnelle et un aspect esthétique classique. Ce dernier aspect n'est pas une caractéristique indispensable de la présente invention, mais contribue à démontrer que la présente solution est particulièrement avantageuse relativement aux réalisations de l'art antérieur discuté ci-avant. La montre-souris selon l'invention peut être portée tout au long de la journée sans que la fonction liée à la commande d'un ordinateur ait une incidence sur l'aspect esthétique et les dimensions conventionnelles de cette montre.

Grâce à la présente invention, un utilisateur dispose d'un interface de commande portable, sans contact et présentant une zone sensible relativement étendue pour son doigt. Les capteurs tactiles, notamment des capteurs capacitifs ou résistifs, ne nécessitent pas, contrairement aux capteurs de force, l'application d'une pression relativement importante. De ce fait, les contraintes mécaniques exercées sur la montre sont négligeables et cette montre ne subit pas de déplacement significatif sur le bras de l'utilisateur. Ainsi, l'utilisation est aisée et permet une commande précise et efficace du curseur d'ordinateur.

D'autres avantages de la présente invention ressortiront également de la description suivante de divers modes de réalisation, donnés à titre d'exemples nullement limitatifs, qui sont représentés sur le dessin annexé dans lequel :
- la figure 1 est une vue schématique de dessus d'un premier mode de réalisation de l'invention ;
- des figures 2 et 3 sont respectivement deux graphes décrivant le déplacement du curseur sur l'écran relativement au déplacement du doigt sur la zone sensible définie par les capteurs tactiles;
- la figure 4 est une vue schématique de dessus d'un deuxième mode de réalisation de l'invention;
- La figure 5 est une vue schématique de dessus d'un troisième mode de réalisation de l'invention;
- la figure 6 est une vue schématique de dessus d'un quatrième mode de réalisation de l'invention; et
- la figure 7 est une vue en coupe de la figure 6 selon la ligne VII-VII.

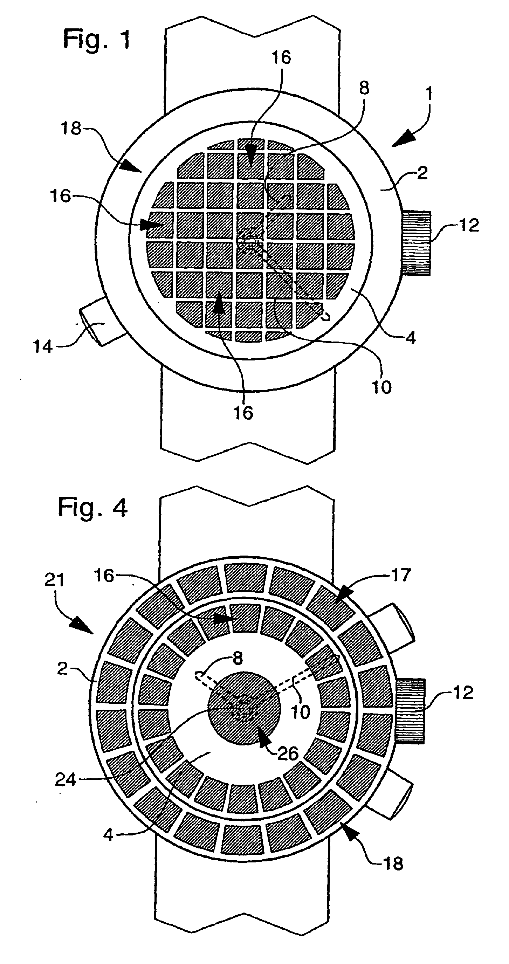

A la figure 1 est représentée une montre 1 comprenant un boîtier 2 et une glace 4 recouvrant un affichage analogique formé de deux aiguilles 8 et 10 représentées en traits interrompus. Ensuite, la montre 1 comprend une couronne 12 et un poussoir 14 situé environ entre 7 et 8 heures.

Selon l'invention, la montre 1 comprend des moyens de commande du déplacement d'un curseur d'ordinateur formés par un ensemble de capteurs tactiles dont les plages sensibles 16 sont supportées par la glace 4. Plus précisément, dans le présent mode de réalisation, les capteurs tactiles sont du type capacitif et les plages sensibles 16 sont formées par des électrodes déposées dessous la glace 4 (voir figure 7). Chaque électrode est reliée électriquement à une unité électronique de traitement des signaux électriques reçus, notamment à l'aide de plages de contact situées en périphérie de la glace 4 et reliées à cette unité électronique par un connecteur formé d'une succession de tranches conductrices et isolantes, en alternance. L'homme du métier sait comment former des électrodes transparentes à la surface d'un verre et comment connecter une pluralité de capteurs tactiles capacitifs à une unité électronique (non représentée) située à l'intérieur de la montre 1. La glace 4 occupant la majeure partie de la surface supérieure du boîtier 2, la zone sensible pour l'actionnement d'un curseur d'ordinateur est relativement grande sans que les dimensions conventionnelles d'une montre soit modifiées, ni son aspect extérieur, ni l'affichage de l'heure sous une forme analogique. On notera toutefois que l'invention s'applique également à un affichage digital de l'heure. Dans ce dernier cas, les plages sensibles 16 des capteurs capacitifs sont agencés soit sur une glace de protection recouvrant la cellule LCD, soit au moins partiellement sur la partie supérieure de cette cellule LCD.

L'ensemble des plages sensibles 16 est supporté par la glace 4 et ces plages s'étendent sur la majeure partie de cette glace. Dans une variante de réalisation, on peut également prévoir qu'une partie des plages sensibles des capteurs tactiles soit située sur la lunette ou partie supérieure 18 du boîtier 2.

Les plages sensibles 16 définissent la zone sensible au toucher de la montre pour actionner le déplacement d'un curseur d'ordinateur. A la figure 1, ces plages sensibles 16 sont agencées sous forme d'une matrice définissant des lignes et des colonnes de plages sensiblement carrées.

Dans une première variante de commande du curseur, il est possible de déterminer l'ensemble des plages sensibles activées lors du passage d'un doigt sur la glace 4. Ensuite, par une méthode connue, notamment celle des moindres carrés, on définit une direction de déplacement correspondante pour le curseur. De plus, la vitesse à laquelle les plages sensibles successives sont activées permet de déterminer une vitesse de déplacement de ce curseur, par exemple proportionnelle à la vitesse de déplacement du doigt sur la glace. En effectuant une différenciation du niveau d'activation de chaque capteur tactile, il est possible d'effectuer une pondération dans la régression linéaire suggérée ci-avant. De plus, il est possible de décomposer le mouvement du doigt en effectuant une régression linéaire par secteur ou région de la zone sensible au toucher.

Selon une deuxième variante de commande du curseur, il est prévu de suivre le tracé effectué par le doigt sur la glace 4 et de reproduire un 0° déplacement du curseur correspondant à ce tracé avec un facteur d'amplification donné. Pour ce faire, on peut notamment sélectionner les plages sensibles activées au-dessus d'un certain seuil ou ne retenir dans chaque période temporelle prédéterminée que le capteur tactile présentant le niveau d'activation maximum ou le centre de gravité des capteurs présentant tous sensiblement un tel niveau maximum. On peut donc déterminer avec une fréquence donnée les positions successives d'un doigt sur la glace 4. De plus, il est alors aisé de déterminer une vitesse de déplacement du doigt.

Selon une variante perfectionnée de commande du curseur, il est prévu de varier de manière non linéaire le déplacement du curseur sur l'écran d'ordinateur en fonction du déplacement du doigt de l'utilisateur sur la zone sensible de la montre. Selon un premier mode de mise en oeuvre représenté par le graphe à la figure 2, le rapport entre le déplacement ΔY du curseur et le chemin ΔX effectué par le doigt sur la glace 4 augmente en fonction de la vitesse V de déplacement du doigt sur la glace 4 ou, de manière équivalente, de la fréquence instantanée ou moyenne F à laquelle l'activation successive de plages adjacentes est effectuée. A la figure 2, la variation du rapport susmentionné est continue en fonction de V (F). Dans un deuxième mode de mise en oeuvre représenté par le graphe de la figure 3, le rapport susmentionné est en escaliers. A faible vitesse, il est prévu un rapport de 1. Pour une vitesse moyenne il est prévu un rapport 2, alors que pour une haute vitesse le rapport est égal à 3. Bien évidemment, ces valeurs sont données à titre d'exemple non limitatif. Comme cela ressort de la figure 2, il est possible que le rapport soit inférieur à 1 pour les vitesses faibles. Ce perfectionnement permet d'effectuer de grands déplacements avec une précision relative lorsque le curseur est éloigné de l'objectif visé. Par contre, lorsque le curseur doit être déplacé précisément sur une distance moindre, la présente solution permet d'obtenir un déplacement faible et précis du curseur correspondant au déplacement du doigt dans le plan général par la glace 4.

Le poussoir 14 est prévu notamment pour effectuer un "clic" ou "double clic" propre au fonctionnement d'une souris d'ordinateur. Les moyens pour détecter la vitesse de déplacement du doigt ou la fréquence d'activation de capteurs successifs peuvent être conçus par l'homme du métier sans difficultés majeures. De manière classique, le poussoir 14 est associé à un contacteur électrique agencé dans le boîtier 2. Selon un autre mode de réalisation, la fonction "clic" est effectuée au moyen d'un contacteur dont l'organe d'actionnement est situé dans la partie supérieure du boîtier 2, notamment dans la région "6 heures". A titre de variante, ce contacteur peut être remplacé par un capteur de pression ou un capteur tactile agencé dans cette même région. De tels modes de réalisation sont particulièrement avantageux par le fait qu'ils permettent de commander le déplacement du curseur à l'aide notamment de l'index ou du majeur et d'effectuer la fonction "clic" à l'aide du pouce de la même main.

A l'aide de la figure 4 on décrira un deuxième mode de réalisation. Les références déjà décrites avant ne seront pas à nouveau décrites en détail. La montre 21 comprend des capteurs tactiles dont les plages sensibles 16 d'une première partie sont situées sensiblement dans la région périphérique de la glace 4 et la seconde partie des plages sensibles 17 est agencée au niveau de la partie supérieure de la boîte 2. Les plages sensibles 16 et 17 forment respectivement deux zones concentriques sensibles au toucher. Dans chacune des zones, les plages sensibles sont agencées circulairement et définissent relativement au centre 24 de ces zones, confondu avec l'axe des aiguilles 8 et 10, une direction angulaire variable. Selon ce deuxième mode de réalisation, la direction de déplacement du curseur d'ordinateur est déterminé par l'orientation de la plage sensible 16 ou 17, respectivement des plages sensibles 16 et/ou 17 activées par le doigt d'un utilisateur relativement au centre 24. De plus, il est prévu que la vitesse de déplacement du curseur dépend de la zone sensible activée ou de deux zones sensibles adjacentes activées simultanément. Dans l'exemple de la figure 4, on peut ainsi définir trois vitesses de déplacement différentes, à savoir une première vitesse lorsque seule la zone annulaire intérieure est activée, une deuxième vitesse lorsque la zone annulaire extérieure est activée et une troisième vitesse intermédiaire lorsque les deux zones sensibles 16 et 17 sont activées simultanément. Ce mode de réalisation est avantageux par le fait que les deux zones sensibles concentriques sont matériellement et visuellement séparées l'une de l'autre, la zone interne étant supportée par la glace 4 alors que la zone externe est supportée par la partie supérieure 18 de la boîte 2 entourant cette glace. Selon la variante représentée à la figure 4, la fonction "clic" est effectuée au moyen d'un capteur capacitif 26 supporté par la glace 4 et situé dans la région centrale de celle-ci. Ceci permet notamment d'effectuer la fonction "clic" de manière rapide à l'aide du doigt activant également les plages sensibles 16 et/ou 17. Bien entendu, pour effectuer un déplacement du curseur tout en maintenant le capteur 26 dans un état activé, il est possible d'utiliser deux doigts. On notera ici à titre de variante que la fonction "clic" peut dans une variante de réalisation être effectuée à l'aide d'un poussoir comme dans le cas de la figure 1.

De manière similaire au deuxième mode de réalisation décrit ci-avant, les capteurs tactiles sont agencés sous forme de zones circulaires concentriques dans le troisième mode de réalisation de la figure 5. Une partie des plages sensibles 16A de ces capteurs tactiles définissent une zone interne alors que les plages sensibles 16B de l'autre partie définissent une zone sensible externe. Par contre, dans le présent cas, l'ensemble de plages sensibles est supporté par la glace 4 qui est au moins partiellement transparente. Il est prévu un affichage digital de l'heure et éventuellement d'autres informations, en particulier dans la zone 34. L'affichage en lui-même n'étant pas l'objet de la présente invention, cet aspect est représenté de manière tout à fait schématique. La glace 4 peut recouvrir la cellule d'affichage LCD ou former une partie supérieure externe de cette cellule. La commande de déplacement du curseur est similaire à celle du deuxième mode de réalisation. Afin de permettre de repérer les deux zones sensibles au toucher, il est possible de prévoir des moyens visuels, notamment un design définissant ces deux zones concentriques.

La fonction "clic" est effectuée à l'aide d'un organe 36 situé dans une position "6 heures" et associé à un contacteur ou interrupteur. A titre de variante, l'organe 36 peut être associé à un capteur de pression.

Selon une variante de réalisation également applicable aux autres modes de réalisation décrits ci-avant, la fonction "clic" peut être réalisée au moyen d'un capteur tactile, d'un capteur de pression ou d'un poussoir associé à un contacteur agencés dans un maillon 38 du bracelet 39 de la montre.

Aux figures 6 et 7 est représenté schématiquement un quatrième mode de réalisation d'une montre selon l'invention. Les références déjà décrites à la figure 1 ne seront pas à nouveau mentionnées en détail ici. Les moyens de commande de déplacement du curseur sont similaires au premier mode de réalisation. La zone sensible au toucher est située au niveau de la glace 4. Ce quatrième mode de réalisation se distingue essentiellement par les moyens permettant d'effectuer la fonction "clic". Ces moyens sont formés par la glace 4 associée à un capteur de pression, notamment un cristal piézo-électrique 44 agencé sous la glace 4 dans sa région périphérique. La fonction "clic" est effectuée par l'application d'une pression sur la glace 4.

Les plages sensibles 16 sont formées par un matériau transparent et sont reliées électriquement à des plages de contact 46 situées dans la région périphérique de la glace 4. Ces plages 46 sont reliées électriquement au mouvement électronique 48 et plus particulièrement à l'unité électronique 50 de traitement des signaux électriques foumis par les capteurs tactiles. Cette connexion électrique est effectuée à l'aide d'un connecteur du type Zebra® 52 présentant des tranches conductrices placées en regard des plages 46, ces tranches conductrices étant séparées par des tranches isolantes. De têts connecteurs en élastomère sont connus de l'homme du métier.

L'unité électronique 50 est reliée électriquement à une antenne 54 permettant une communication sans contact avec un lecteur ou récepteur prévu dans l'ordinateur ou comme unité périphérique de celui-ci. Une pile ou un accumulateur rechargeable 56 est prévu comme source d'alimentation électrique. On notera que l'accumulateur rechargeable peut être avantageusement associé à une génératrice électrique intégrée dans la montre 41 et couplée mécaniquement à une masse oscillante, ce système étant connu de l'homme du métier.

Ainsi dans ce dernier mode de réalisation, toutes les fonctions relatives à la commande d'un curseur d'ordinateur sont associées à la glace 4. Les fonctions "clic" et "double clic" s'effectuent respectivement par une pression et deux pressions successives sur la glace 4. On notera encore que le capteur piézo-électrique 44 peut avoir une forme annulaire ou être formé de plusieurs segments disposés circulairement. De même, le connecteur 52 peut être annulaire ou être formés par plusieurs segments. Dans un mode de réalisation particulier, les segments formant le capteur 44 et les segments formant le connecteur 52 sont agencés circulairement en alternance de manière à limiter la surface périphérique de la glace 4 nécessaire au capteur de pression et au connecteur électrique. Le capteur de pression peut également être formé par des éléments piézo-résistifs ou par des micro-contacteurs dans un autre mode de réalisation.

Finalement, on notera que la forme de la glace 4 peut être quelconque et notamment de forme sensiblement carrée ou rectangulaire.

## Revendications

1. Montre (1; 21; 31; 41) comprenant des moyens d'affichage (8, 10; 34) d'au moins une information horaire et ayant un élément externe (4) au moins partiellement transparent recouvrant lesdits moyens d'affichage ou formant une partie externe de ces moyens d'affichage et des premiers moyens de commande étant formés d'une pluralité de capteurs tactiles dont les plages sensibles respectives (16, 16A, 16B) sont supportées au moins partiellement par ledit élément externe, **caractérisée par** ce que les premiers moyens de commande (16, 17, 16A, 16B, 50, 52, 54) sont aptes à commander le déplacement d'un curseur sur un écran d'ordinateur.

2. Montre selon la revendication 1, **caractérisée en ce que** lesdits premiers moyens comprennent un affichage analogique (8, 10) protégé par ledit élément externe (4) qui définit la glace de cette montre, lesdites plages sensibles (16) étant au moins en partie superposées à cet affichage analogique.

3. Montre selon la revendication 1 ou 2, **caractérisée en ce que** l'ensemble desdites plages sensibles (16, 16A, 16B) desdits capteurs tactiles formant lesdits premiers moyens est supporté par ledit élément externe (4).

4. Montre selon la revendication 1 ou 2, **caractérisée en ce qu'**une partie desdites plages sensibles (17) desdits capteurs tactiles est agencée dans la partie supérieure (18) du boîtier (2) de la montre entourant ledit élément externe (4).

5. Montre selon l'une des revendications précédentes, **caractérisée en ce que** lesdites plages sensibles respectives de ladite pluralité de capteurs tactiles sont agencées sous forme d'une matrice définissant des lignes et des colonnes qui s'étendent sur la majeure partie dudit élément externe (4).

6. Montre selon la revendication 5, **caractérisée en ce qu'**elle comprend en outre des moyens pour détecter la vitesse d'un doigt de l'utilisateur sur ledit élément externe ou la fréquence d'activation de capteurs successifs.

7. Montre selon la revendication 6, **caractérisée en ce que** le rapport entre le déplacement (ΔY) dudit curseur et le chemin (ΔX) effectué par un doigt d'un utilisateur sur ledit élément externe (4) est moindre à faible vitesse ou fréquence d'activation qu'à relativement haute vitesse ou fréquence d'activation.

8. Montre selon l'une des revendications 5 à 7, **caractérisée en ce que** le déplacement dudit curseur sur ledit écran d'ordinateur correspond sensiblement au tracé effectué par un doigt d'un utilisateur sur ledit élément externe (4).

9. Montre selon l'une des revendications 1 à 4, **caractérisée en ce que** lesdites plages sensibles (16, 17; 16A, 16B) sont agencées dans des zones concentriques, la direction de déplacement dudit curseur étant déterminée par l'orientation de la ou des plage(s) activée(s) relativement au centre desdites zones concentriques.

10. Montre selon la revendication 9, **caractérisée en ce que** la vitesse de déplacement dudit curseur dépend de la zone concentrique activée ou de deux zones concentriques adjacentes qui sont activées simultanément.

11. Montre selon l'une quelconque des revendications précédentes, **caractérisée en ce qu'**elle comprend en outre des deuxièmes moyens de commande (14; 26; 36; 4, 44) pour effectuer une sélection d'un objet représenté sur ledit écran ou une commande en relation avec cet objet.

12. Montre selon la revendication 11, **caractérisée en ce que** lesdits deuxièmes moyens de commande (36) sont agencés dans la partie supérieure (18) du boîtier (2) sensiblement dans une position "6 heures".

13. Montre selon la revendication 11 ou 12, **caractérisée en ce que** lesdits deuxièmes moyens de commande sont également formés par un capteur tactile (26).

14. Montre selon la revendication 11, **caractérisée en ce que** lesdits deuxièmes moyens de commande sont formés par un poussoir (14) associé à un contacteur électrique.

15. Montre selon la revendication 11, **caractérisée en ce que** lesdits deuxièmes moyens de commande sont agencés dans un maillon (38) du bracelet de cette montre ou dans une partie du bracelet de cette montre.

16. Montre selon la revendication 11, **caractérisée en ce que** lesdits deuxièmes moyens de commande sont formés par ledit élément externe (4) associé à un capteur de pression, ladite sélection d'un objet ou ladite commande en relation avec cet objet étant effectuée par l'application d'une pression sur ledit élément externe.

17. Montre selon la revendication 16, **caractérisée en ce que** ledit capteur de pression est formé par un cristal piézo-électrique (44) agencé en périphérie dudit élément externe (4).

18. Montre selon la revendication 11, **caractérisée en ce que** lesdits deuxièmes moyens de commande sont formés par ledit élément externe (4) associé à au moins un micro-contacteur ou contacteur à faible déplacement.

## Patentansprüche

1. Uhr (1; 21; 31; 41), die Mittel (8, 10; 34) zum Anzeigen wenigstens einer Zeitinformation sowie ein externes Element (4) umfasst, das wenigstens teilweise lichtdurchlässig ist und die Anzeigemittel abdeckt oder einen äußeren Teil dieser Anzeigemittel bildet, und außerdem erste Steuermittel umfasst, die aus mehreren Berührungssensoren gebildet sind, deren jeweilige empfindliche Bereiche (16, 16A, 16B) wenigstens teilweise durch das externe Element unterstützt sind, **dadurch gekennzeichnet, dass** die ersten Steuermittel (16, 17, 16A, 16B, 50, 52, 54) so beschaffen sind, dass sie die Bewegung eines Cursors auf einem Computerbildschirm steuern.

2. Uhr nach Anspruch 1, **dadurch gekennzeichnet, dass** die ersten Mittel eine analoge Anzeige (8, 10) umfassen, die durch das externe Element (4) geschützt ist, das das Uhrenglas dieser Uhr definiert, wobei die empfindlichen Bereiche (16) wenigstens zum Teil dieser analogen Anzeige überlagert sind.

3. Uhr nach Anspruch 1 oder 2, **dadurch gekennzeichnet, dass** die Gesamtheit der empfindlichen Bereiche (16, 16A, 16B) der Berührungssensoren, die die ersten Mittel bilden, durch das externe Element (4) unterstützt ist.

4. Uhr nach Anspruch 1 oder 2, **dadurch gekennzeichnet, dass** ein Teil der empfindlichen Bereiche (17) der Berührungssensoren in dem oberen Teil (18) des Gehäuses (2) der Uhr, der das externe Element (4) umgibt, angeordnet ist.

5. Uhr nach einem der vorhergehenden Ansprüche, **dadurch gekennzeichnet, dass** die jeweiligen empfindlichen Bereiche der mehreren Berührungssensoren matrixförmig angeordnet sind und Zeilen und Spalten definieren, die sich auf dem Hauptteil des externen Elements (4) erstrecken.

6. Uhr nach Anspruch 5, **dadurch gekennzeichnet, dass** sie außerdem Mittel umfasst, um die Geschwindigkeit eines Fingers des Anwenders auf dem externen Element oder die Aktivierungshäufigkeit aufeinander folgender Sensoren zu erfassen.

7. Uhr nach Anspruch 6, **dadurch gekennzeichnet, dass** das Verhältnis zwischen der Bewegung (ΔY) des Cursors und dem Weg (ΔX), den ein Finger eines Anwenders auf dem externen Element (4) zurücklegt, bei geringer Geschwindigkeit oder Aktivierungshäufigkeit kleiner ist als bei verhältnismäßig hoher Geschwindigkeit oder Aktivierungshäufigkeit.

8. Uhr nach den Ansprüchen 5 bis 7, **dadurch gekennzeichnet, dass** die Bewegung des Cursors auf dem Computerbildschirm im Wesentlichen der Bahn entspricht, die ein Finger eines Anwenders auf dem externen Element (4) zurücklegt.

9. Uhr nach einem der Ansprüche 1 bis 4, **dadurch gekennzeichnet, dass** die empfindlichen Bereiche (16, 17; 16A, 16B) in konzentrischen Zonen angeordnet sind, wobei die Richtung der Bewegung des Cursors durch die Orientierung des oder der aktivierten Bereiche in Bezug auf das Zentrum der konzentrischen Zonen bestimmt ist.

10. Uhr nach Anspruch 9, **dadurch gekennzeichnet, dass** die Bewegungsgeschwindigkeit des Cursors von der aktivierten konzentrischen Zone oder von zwei benachbarten konzentrischen Zonen, die gleichzeitig aktiviert sind, abhängt.

11. Uhr nach einem der vorhergehenden Ansprüche, **dadurch gekennzeichnet, dass** sie außerdem zweite Steuermittel (14; 26; 36; 4, 44) umfasst, um eine Auswahl eines auf dem Bildschirm angezeigten Objekts oder einen auf dieses Objekt bezogenen Befehl auszuführen.

12. Uhr nach Anspruch 11, **dadurch gekennzeichnet, dass** die zweiten Steuermittel (36) im oberen Teil (18) des Gehäuses (2) im Wesentlichen an einer "6 Uhr" entsprechenden Position angeordnet sind.

13. Uhr nach Anspruch 11 oder 12, **dadurch gekennzeichnet, dass** die zweiten Steuermittel ebenfalls durch einen Berührungssensor (26) gebildet sind.

14. Uhr nach Anspruch 11, **dadurch gekennzeichnet, dass** die zweiten Steuermittel durch einen einem elektrischen Kontaktgeber zugeordneten Drücker (14) gebildet sind.

15. Uhr nach Anspruch 11, **dadurch gekennzeichnet, dass** die zweiten Steuermittel in einem Glied (38) des Armbandes dieser Uhr oder in einem Teil des Armbandes dieser Uhr angeordnet sind.

16. Uhr nach Anspruch 11, **dadurch gekennzeichnet, dass** die zweiten Steuermittel durch das einem Drucksensor zugeordnete externe Element (4) gebildet sind, wobei die Auswahl eines Objekts oder des auf dieses Objekt bezogenen Befehls durch Ausüben eines Drucks auf das externe Element ausgeführt wird.

17. Uhr nach Anspruch 16, **dadurch gekennzeichnet, dass** der Drucksensor durch einen piezoelektrischen Kristall (44) gebildet ist, der am Umfang des externen Elements (4) angeordnet ist.

18. Uhr nach Anspruch 11, **dadurch gekennzeichnet, dass** die zweiten Steuermittel durch das externe Element (4) gebildet sind, dem wenigstens ein Mikrokontaktgeber oder ein Kurzhub-Kontaktgeber zugeordnet ist.

## Claims

1. Watch (1; 21; 31; 41) including display means (8; 10; 34) for at least one item of time related data and having an at least partially transparent outer element (4) covering said display means or forming an outer portion of these display means and first control means formed of a plurality of touch sensitive sensors whose respective sensitive pads (16, 16A, 16B) are supported at least partially by said outer element, **characterised in that** the first control means (16, 17, 16A, 16B, 50, 52, 54) are able to control the movement of a cursor on a computer screen.

2. Watch according to claim 1, **characterised in that** said first means include an analogue display (8, 10) protected by said outer element (4) which defines the watch crystal, said sensitive pads (16) being at least partially superposed with said analogue display.

3. Watch according to claim 1 or 2, **characterised in that** the set of said sensitive pads (16, 16A, 16B) of said touch sensitive sensors forming said first means is supported by said outer element (4).

4. Watch according to claim 1 or 2, **characterised in that** a part of said sensitive pads (17) of said touch sensitive sensors is arranged in the top portion (18) of the case (2) of the watch surrounding said outer element (4).

5. Watch according to any of the preceding claims, **characterised in that** said respective sensitive pads of said plurality of touch sensitive sensors are arranged in the shape of a matrix defining lines and columns which extend over most of said outer element (4).

6. Watch according to claim 5, **characterised in that** it further includes means for detecting the speed of a user's finger over said outer element or the actuation frequency of successive sensors.

7. Watch according to claim 6, **characterised in that** the ratio between the movement (ΔY) of said cursor and the path (ΔX) taken by a user's finger across said outer element (4) is less at low speed or actuation frequency than at relatively high speed or actuation frequency.

8. Watch according to claims 5 to 7, **characterised in that** the movement of said cursor over said computer screen substantially corresponds to the path taken by the user's finger over said outer element (4).

9. Watch according to any of claims 1 to 4, **characterised in that** said sensitive pads (16, 17; 16A, 16B) are arranged in concentric zones, the direction of movement of said cursor being determined by the orientation of the pad or pads actuated relative to the centre of said concentric zones.

10. Watch according to claim 9, **characterised in that** the speed of movement of said cursor depends on the concentric zone actuated or two adjacent concentric zones which are actuated simultaneously.

11. Watch according to any of the preceding claims, **characterised in that** it further includes second control means (14; 26; 36; 4; 44) for selecting an object shown on said screen or carrying out a command relating to said object.

12. Watch according to claim 11, **characterised in that** said second control means (36) are arranged in the top portion (18) of the case (2) substantially in the 6 o'clock position.

13. Watch according to claim 11 or 12, **characterised in that** said second control means are also formed by a touch sensitive sensor (26).

14. Watch according to claim 11, **characterised in that** said second control means are formed by a push-button (14) associated with an electric contactor.

15. Watch according to claim 11, **characterised in that** said second control means are arranged in a link (38) of the wristband of the watch or in a portion of the wristband of the watch.

16. Watch according to claim 11, **characterised in that** said second control means are formed by said outer element (4) associated with a pressure sensor, said selection of an object or said command relating to said object being performed by applying pressure onto said outer element.

17. Watch according to claim 16, **characterised in that** said pressure sensor is formed by a piezoelectric crystal (44) arranged on the periphery of said outer element (4).

18. Watch according to claim 11, **characterised in that** said second control means are formed by said outer element (4) associated with at least one micro-contactor or small travel contactor.
